# EUROPEAN PATENT APPLICATION

(11) **EP 0 733 922 A1**
(43) Date of publication of application: **25.09.1996**
(21) Application number: 96301709.0
(22) Date of filing: 13.03.1996
(51) Int. Cl.: G02B 6/38

(54) **A standard connection (SC)-to-duplex connector adapter assembly constructed with snap-together parts**

(30) Priority: 22.03.1995 US 408747
(71) Applicant: AT&T IPM Corp., Coral Gables, Florida 33134 (US)
(72) Inventor: Carlisle, Arthur Wallace, DeKalb County, Dunwoody, Georgia 30338 (US)
(74) Representative: Johnston, Kenneth Graham

(57) **Abstract**

An adapter assembly (1) of this invention includes a first part (2), a second part (3), a pair of sleeves (4) and a pair of sleeve retainers (5). The first part defines two standard connectors (SC) housings with respective slots (40), and an alignment hole (15). The first part also includes first engagements preferably in the form of opposing hooked members (18,19) extending from respective sides of the first part. In the second part, the sleeves (4) are inserted in respective ferrule guides (21) and held in place with respective sleeve retainers (5). A first end of the second part is adapted to receive a duplex connector which can be, for example, an Enterprise Systems Connection (ESCON) duplex connector. At a second end opposite the first end, ends of the ferrule guides protrude outwardly. On opposite sides of each ferrule guide, hooked members (31) extend from the second end of the second part. Preferably, the ferrule guides (21) and respective hooked members (31) are attached to respective raised platforms (32) at the second end of the second part, which engage with an end of the SC housings defined in the first part to help maintain proper positioning of the first part relative to the second part. Between the two ferrule guides (21) and their respective hooked members (31), an alignment post (34) extends from the second end of the second part (3). The alignment post is adapted to fit into the alignment hole (15) defined by the first part (2). Preferably, the alignment post (34) has a canted edge so that the first (2) and second parts (3) can only be assembled in the correct way. Also, the alignment post and the alignment hole are preferably correspondingly tapered to ease insertion of the alignment post into the alignment hole. At its sides, the second part includes second engagements preferably in the form of recesses (35) defined near the second end of the second part (3). From the second end to each recess, a ramp (36) is provided on each side of the second part (3). The first (2) and second parts (3) are snapped together by inserting the alignment post (34) of the second part into the alignment hole (15) of the first part and pushing the first and second parts together. As the ends of the hooked members (18,19) slide on respective ramps, the hooked members are flexed outwardly away from each other. As the hooked members pass the ramps (36), the hooked members snap into engagement in respective recesses (35) of the second part, thus holding the first (2) and second (3) parts together.

## Description

### BACKGROUND OF THE INVENTION

### Field of the Invention

This invention is directed to a standard connector (SC)-to-duplex connector adapter assembly constructed with snap-together parts. The adapter assembly couples one or two SC connectors attached to ends of respective simplex optical fiber jumpers, to a single duplex connector attached to an end of a duplex optical fiber jumper.

### Background of the Invention

In local area networks (LANs) or computer interconnections, for example, there is often a need to connect an SC connector that terminates a simplex optical fiber jumper to a duplex connector that terminates a duplex optical fiber jumper. SC connectors such as that disclosed in U.S. Patent No. 5,212,752, are gaining widespread commercial acceptance as are duplex connectors such as that disclosed in U.S. Patent No. 5,016,968 (without the shroud) or the Enterprise Systems Connections (ESCON) duplex connector commercially available from International Business Machines of Armonk, New York. With this commercial acceptance of SC connectors and various duplex connectors, there is an increasing need for a relatively inexpensive SC-to-duplex connector adapter.
One conceivable way to manufacture an SC-to-duplex connector adapter is to join together a plastic SC receptacle part with a plastic duplex connector receptacle part with ultrasonic welding, a commonly-used technique for joining plastic parts. However, ultrasonic welding equipment is significantly expensive and requires special tooling, so the use of ultrasonic welding increases the cost of assemblies made with this technique relative to assemblies made without ultrasonic welding. Accordingly, an SC-to-duplex connector adapter assembly that needs no ultrasonic welding to assemble, would be highly desirable.

### SUMMARY OF THE INVENTION

This invention is a relatively low-cost standard connector (SC)-to-duplex connector adapter assembly constructed with snap-together parts. The adapter assembly includes a first part made with plastic material such as polysofone or polycarbonate, for example. The first part has a first end defining parallel, spaced SC housings. Between the SC housings, an alignment hole that is substantially parallel to the SC housings, is defined by the first part. Preferably, the alignment hole is tapered, becoming increasingly narrow along its length from the second end to the first end of the first part. The first part also includes first engagements. The first engagements can be hooked members extending in an opposing relationship from respective side walls of the first part outwardly from a second end of the first part.

The adapter assembly also includes a second part made of plastic material which can be polysofone or polycarbonate, for example. The second part has a first end adapted to receive a duplex connector, and defining a duplex connector receptacle. For example, the duplex connector receptacle can be adapted to receive an ESCON duplex connector. The second part also has a second end opposite its first end, through which substantially perpendicularly extend two parallel, spaced cylinder- or tube-like ferrule guides. On opposite sides of each ferrule guide, two hooked members extend substantially perpendicularly from the second end of the second part. The hooked members have hooked ends that protrude toward respective ferrule guides. Each ferrule guide and its respective hooked members are attached to a raised platform at the second end of the second part. Between the two ferrule guides and their respective hooked members, an alignment post extends substantially perpendicular to the second end of the second part. Preferably, the alignment post tapers from the second end of the second part to the end of the alignment post, being relatively broad at the second end of the second part and relatively narrow at the tip end of the alignment post.

On spaced, parallel, opposing side walls, the second part defines respective second engagements. The second engagements can be recesses formed in near proximity to the second end of the second part. Extending from the second end of the second part to each recess, a respective ramp is defined by the second part. Also extending from the second end of the second part to each recess, two side guides are defined by the second part on either side of and substantially parallel with each ramp. The ramps and their associated side guides aid in joining the first and second parts together.

To allow for better alignment of the ferrules of the duplex connector with the ferrules of respective SC connectors, sleeves slitted along their lengths can be fitted into respective ferrule guides. The sleeves can be made from zirconia, plastic, ceramic, metal or other suitable material. Each sleeve can be held in position at one end by a constriction in the ferrule guide, and at the other end by a respective retainer adapted to be fitted and secured to an end of the ferrule guide inside of the duplex connector receptacle. Each sleeve and its retainer can be positioned and secured in a ferrule guide with an elongated tool with an end having a diameter less than that of the sleeve or retainer and a collar that holds the retainer and sleeve in place after they are fitted over the end of the tool. When the tool is inserted into the duplex connector receptacle and slid with the sleeve and retainer into a ferrule guide until the retainer snaps into position at the end of the ferrule guide, the sleeve and retainer can be positioned and fixed in a ferrule guide.

To assemble the first and second parts together, the second end of the first part is arranged to oppose the second end of the second part. The alignment post of the second part is inserted into the alignment hole defined by the first part. As the first and second parts are pushed together, the hooked ends of the respective hooked members (or more generally, the first engagements) are constrained between the side guides and slide along respective ramps which cause the opposing hooked members to flex outwardly in a direction away from each other. Upon further pushing the first and second parts together, the hooked members snap in place in respective recesses (or more generally, the second engagements) defined by the side walls of the second part. When the hooked members snap into place in the recesses, the raised platforms at the second end of the second part tightly engage with the ends of respective SC housings. When thus snapped together, the SC housings of the first part and the ferrule guides and respective hooked members of the second part, together define two SC connector receptacles.

Advantageously, the SC-to-duplex connector adapter assembly of this invention is rigid and durable, and ensures proper alignment of the ferrules of the duplex connector with the ferrules of respective SC connectors when coupled to the adapter assembly. Also, the SC-to-duplex connector adapter assembly of this invention requires no ultrasonic welding with associated expense for assembly, and so is a relatively low-cost assembly.

These together with other objects and advantages, which will become subsequently apparent, reside in the details of construction and operation as more fully hereinafter described and claimed, reference being had to the accompanying drawings, forming a part hereof, wherein like numerals refer to like parts throughout.

### BRIEF DESCRIPTION OF THE DRAWINGS

The present invention can be better understood with reference to the following drawings. The drawings are not necessarily to scale, emphasis instead being placed upon clearly illustrating principles of the present invention.
Fig. 1 is an exploded perspective view of an adapter assembly in accordance with this invention;
Fig. 2 is a view of the adapter assembly after being assembled;
Fig. 3 is a first perspective view of a first part of the adapter assembly;
Fig. 4 is a second perspective view of the first part of the adapter assembly;
Fig. 5 is an end view of the first part from a perspective facing its first end;
Fig. 6 is a partial cross-sectional plan view of the first part taken along the section A-A in Fig. 5;
Fig 7 is a partial cross-sectional view of the first part taken along the section B-B in Fig. 5;
Fig. 8 is a top plan view of the first part;
Fig. 9 is a side view of the second part of the adapter assembly;
Fig. 10 is a partial cross-sectional view of the second part taken along the section A-A in Fig. 9;
Fig. 11 is a perspective view of the partial cross-sectional view of Fig. 10;
Fig. 12 is a partial cross-sectional view of the second part taken along the section B-B in Fig. 9;
Fig 13 is a partial cross-sectional view of the second part taken along the section C-C in Fig. 9;
Fig. 14 is a top plan view of the second part;
Fig. 15 is a view of the second part facing its first end;
Fig. 16 is a view of the second part facing its second end;
Fig. 17 is a partial cut-away view of the adapter assembly connected to two SC connectors and an ESCON duplex connector.

### DESCRIPTION OF THE PREFERRED EMBODIMENTS

The following description of this invention is provided for an adapter assembly suitable for connecting one or two SC connectors to a single Enterprise Systems Connections (ESCON) duplex connector. However, by applying the principles taught in the following description, persons of ordinary skill in the art will be able readily to modify the adapter assembly described herein to accommodate other types of duplex connectors such as that disclosed in U.S. Patent No. 5,016,968.

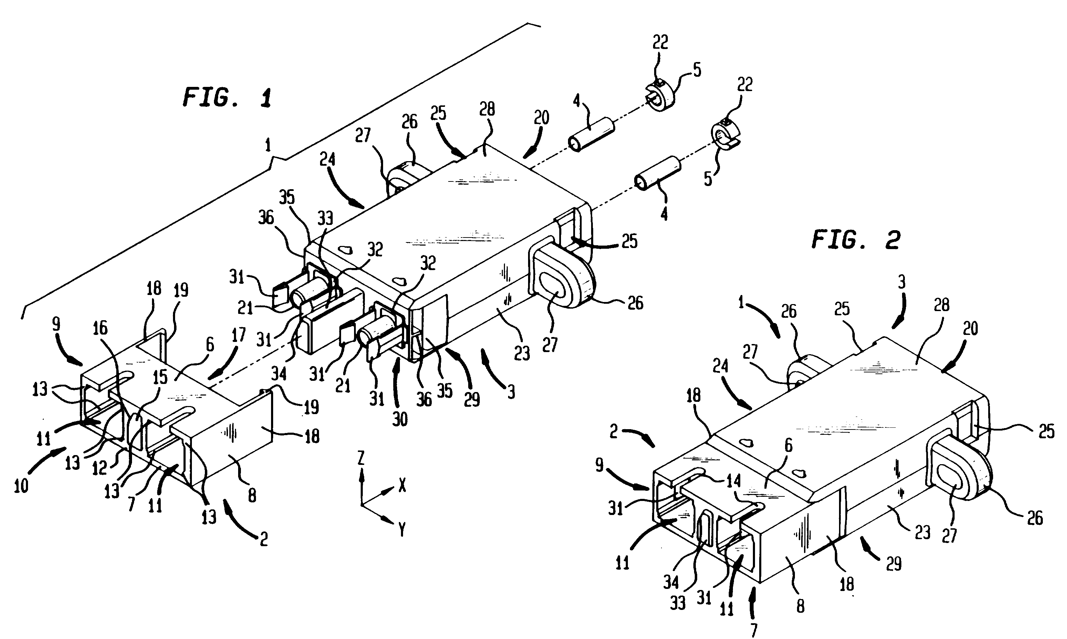

Fig. 1 is an exploded perspective view of an adapter assembly 1 in accordance with this invention. The adapter assembly 1 includes a first part 2, a second part 3, a pair of sleeves 4 and a pair of sleeve retainers 5. Preferably, the first part 2 and the second part 3 are made of a relatively durable plastic such as polysofone or polycarbonate. The sleeves 4 are preferably made of zirconia, plastic, ceramic, metal or other suitable material, and the retainers 5 are preferably made of a plastic material such as polycarbonate.

The first part 2 includes a top side 6 and a bottom side 7 disposed in a spaced, parallel, opposing relationship. Extending between side edges of the top and bottom sides 6, 7 are respective side walls 8, 9 which are perpendicular to the top and bottom sides 6, 7. A first end 10 of the first part 2 is adapted to receive two SC connectors in respective SC housings 11 defined by the top and bottom sides 6, 7 and the side walls 8, 9 and, in addition, the sides of a central portion 12 extending substantially perpendicularly between the middle portions of the top and bottom sides 6, 7. The inside corners of each SC housing 11 have respective rails 13 which engage with outer sides of the SC connectors when inserted into the SC housings 11. The top side 6 defines slots 14 extending perpendicularly from the edge of the top side 6 at the first end 10. The slots 14 extend across the top side 6 for a distance sufficient to allow the slots to receive respective keys or ridges of the SC connectors.

Substantially parallel to the SC housings 11, an alignment hole 15 is defined by the central portion 12 and extends across the length of the first part 2. The alignment hole 15 has a rectangular cross-section with one corner truncated by a canted edge 16. The canted edge 16 ensures proper polarity of the first and second parts 2, 3 by preventing the first and second parts 2, 3 from being assembled together in any manner other than the proper manner.

From a second end 17 opposite to the first end 10, first engagements 18 extend from the side walls 8, 9. Preferably, the first engagements 18 include arms or hooked members arranged in a spaced, opposing relationship. For engagement with the second part 3, the hooked members have hooked distal ends 19.

The second part 3 of the adapter assembly 1 includes a top side 28 and a bottom side 29 arranged in a spaced, parallel and opposing relationship. The sides 23, 24 extend between respective side edges of the top and bottom sides 28, 29 and are substantially perpendicular to the top and bottom sides 28, 29. The second part 3 of the adapter assembly 1 has a first end 20 adapted to receive an ESCON duplex connector. In near proximity to the first end 20 of the second part 3, on sides 23, 24 of the second part 3, are side holes 25 adapted to receive respective engagements of the ESCON duplex connector to hold together the adapter assembly 1 and the ESCON duplex connector. Also extending perpendicularly from the respective sides 23, 24 of the second part 3 are members 26 defining eyelets 27 to receive screws or the like for holding the adapter assembly 1 to a panel or other housing, for example. Inside of the second part 3, the second part is adapted to receive the sleeves 4 in respective tube-like ferrule guides 21. The sleeves 4 are held in place at one end inside of the second part 3 with respective retainers 5. The retainers 5 are substantially C-shaped and can be made of a plastic material such as polycarbonate. The retainers 5 have a substantially flat surface at one end, but at the other end define funnel-like openings with tapered surfaces to guide the ferrules of a duplex connector into the retainers 5 and the sleeves 4. The retainers 5 have tabs 22 which engage with the second part 3 to hold the sleeves 4 therein. To allow the tabs 22 to pass through respective retainer seats to be seated in mold holes in the second part 3, the retainers 5 are C-shaped to flex to a degree to reduce the outer dimensions of the retainers 5 so that they can be seated in the second part 3.

The sleeves 4 and the retainers 5 are fitted in place in the second part 3 using a tool. The tool is elongated with a relatively thin portion at its end, and a collar adjacent to the thin portion. The retainers 5 and the sleeve 4 are slipped over the relatively thin portion. Because the collar is wider than the openings of the retainer 5 and the sleeve 4, the retainer and sleeve are held on the tool by the collar. The end of the tool is then advanced by hand or machine toward a respective ferrule guide and inserted therein. By pushing the tool until the tab 22 of the retainer 5 snaps into position in the second part 3, the sleeve 4 can be fixed in position with the retainer 5.

A second end 30 of the second part 3 opposite the first end 20 is substantially closed with plastic material composing the second part 3. The ferrule guides 21 are disposed at the second end 30 in a spaced, parallel relationship, and the ferrule guides 21 are substantially perpendicular to the second end 30. The ferrule guides 21 not only protrude from the second end 30 of the second part 3, but also extend therethrough. The ends of the ferrule guides 21 extending outwardly from the second end 30 have tapered or funnel-like inner edges that help to guide respective ferrules of SC connectors into the ferrule guides 21. Extending perpendicularly from the second end 30 are arms or hooked members 31 arranged on opposite sides of the ferrule guides 21. Each ferrule guide 21 and its respective hooked members 31 are disposed on a raised platform 32 which extends outwardly from the second end. Between the ferrule guides 21 and their respective hooked members 31, an alignment post 33 extends perpendicular from the second end 30. The tapered alignment post 33 has a substantially rectangular cross-section with one comer truncated by a canted edge 34. The alignment post 33 is adapted for insertion into the tapered alignment hole 15 of the first part 2, to ensure proper alignment of the first part 2 relative to the second part 3. For engagement with the first part 2, the second part 3 is equipped with engagements in the form of recesses 35 defined on respective sides 23, 24 in near proximity to the second end 30. Extending from the recess 35 to the second end 30 are ramps 36 which gradually flex the hooked members or first engagements 18 outwardly when the first and second parts 2, 3 are snapped together. Each recess 35 of the second part receives a respective hooked end 19 of the first part 2.

Fig. 1 includes orthogonal orientation axes x, y, and z. In this document, distances measured along the x-axis are referred to as 'lengths', distances along the y-axis are referred to as 'widths' and distances along the z-axis are referred to as 'heights'.

Fig. 2 is a perspective view of the adapter assembly 1 in a snapped-together configuration. To assemble the adapter assembly 1, the sleeves 4 are fitted into respective ferrule guides 21 held in place with respective retainers 5. The first part 2 is advanced toward the second part 3 to engage the alignment post 33 with the alignment hole 15. As the hooked members 18 are pushed into engagement with the second part 3, the hooked members 18 are flexed outwardly as the hooked ends 19 slide along the ramps 36. Upon further pushing the first part 2 together with the second part 3, the hooked ends 19 snap into the recesses 35 and hold the first part 2 into engagement with the second part 3. The first part 2 and the second part 3 are thus held together in a rigid, durable adapter assembly 1. When snapped together, the SC housings 11 of the first part 2 and the ferrule guides 31 and their respective hooked members 31, together define two separate, parallel SC receptacles. To ensure tight engagement with the SC housings 11, the raised platforms 32 are sized such that they fit just inside of and in contact with the SC housings 11 at the second end 17.

Several features contribute to the strength and rigidity of the adapter assembly 1 in its assembled configuration. The tapering and the canted edge 34 of the alignment post 33, when inserted in the correspondingly tapered alignment hole 15 with corresponding canted edge 16, provides stability for the adapter assembly 1, as does the engagement of the edges of the raised platforms 32 with the SC housings 11. Also, the alignment post 33 is itself rigid and durable and provides structural strength to the adapter assembly 1 when the first and second parts 2, 3 are joined together. Further, the first and second parts 2, 3 are held together reliably with the first and second engagements 18, 35.

Importantly, it should be appreciated that a single mold cannot easily be used to form the first and second parts 2, 3 together as one integrated unit. In large part, this is due to the hooked shapes of the hooked members 31 which will not allow for extraction of the mold if the adapter assembly 1 is made as one integral unit. Thus, the two snap-together parts 2, 3 overcome this problem by forming the SC housings 11 in the first part 2 and separately forming the hooked members 31 with respective ferrule guides 21 in the second part 3.

When inserted into the end 20 of the second part 3, the ferrules of a duplex connector are inserted through respective retainers 5 about midway into the sleeves 4. When the SC connectors are connected to the first part 2, their respective ferrules are fitted into the other ends of the ferrule guides 21 about midway into the sleeves 4 so that the terminal ends of the optical fibers of the ferrules of the SC connectors substantially meet and align with the ends of the optical fibers housed in the ferrules of the duplex connector. The ferrules of the SC connectors and the duplex connector are spring-loaded to force the ferrule ends together within respective sleeves 4. Due to the high degree of alignment of the optical fibers of the SC connectors and respective optical fibers of the duplex connectors afforded by the adapter assembly 1 of the invention, the adapter assembly 1 has been found to have relatively little transmission loss in coupling the optical fibers of duplex connectors with the optical fibers of SC connectors.

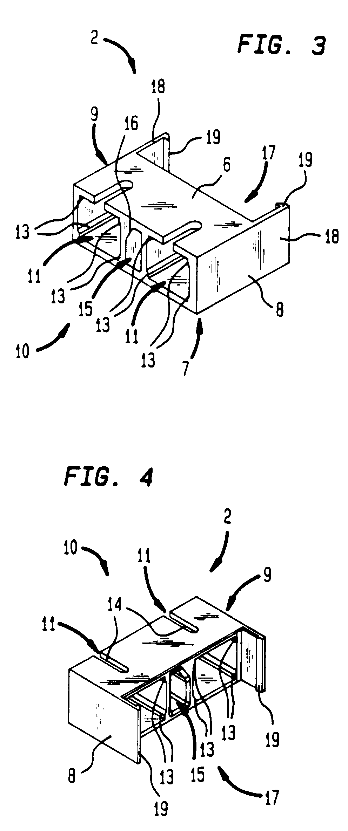

Fig. 3 is a perspective view of the first part 2. The elements in Fig. 3 have been described previously. Note that the rails 13 have tapers or ramp-like sides near the first end 10 to help guide the SC connectors into the SC housings 11.

Fig. 4 is another perspective view of the first part 2 viewed from the second end 17. Although the elements of the first part 2 have been described in large part previously, the perspective view of Fig. 4 is given to provide a better understanding of the first part 2 in three dimensions. Note that alignment hole 15 has tapered or ramped surfaces at its entrance at the second end 17 that guide the alignment post 33 of the second part 3 into the alignment hole 15. Also, the alignment hole 15 tapers from the second end 17 toward the first end 10 and is relatively broad at the second end 17 (as shown in Fig. 4) and relatively narrow at the first end 10 (as shown in Fig. 3).

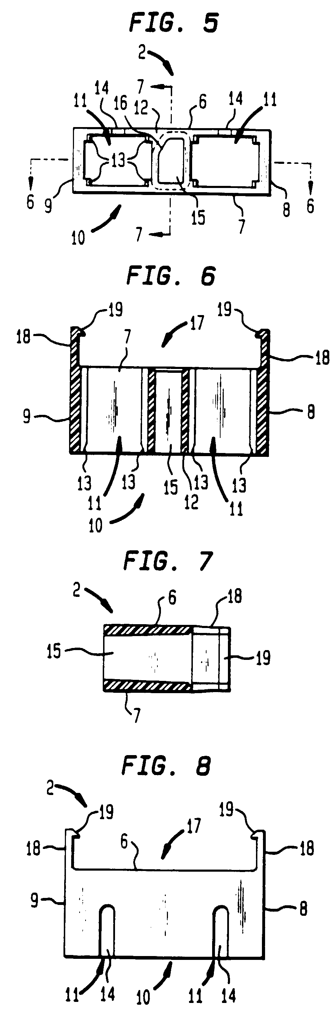

Fig. 5 is a view of the first part 2 viewed from a perspective facing the first end 10. As presently realized, the first part 2 measures 1.268" in width and .391" in height. The centers of the SC housings 11 are spaced by .7" and thus conform to the spacings of the optical fiber ends in the ferrules of an ESCON duplex connector. Each SC housing 11 measures .436" at its largest width and .293" at its largest height. At their smallest dimensions running between rails 13, the SC housings 11 measure .358" in width and .215" in height. Thus, the rails 13 are approximately .039" on each side. Centered between the two SC housings 11 in the middle portion 12 is defined the alignment hole 15. The dimensions of the alignment hole 15 are such that it can be defined in the middle portion 12 between the SC housings 11 and of course is sized to snugly fit the alignment post 33 of the second part 3 when inserted therein. The canted edge 16 prevents the first part 2 from being engaged with the second part 3 in an improper manner and also provides a transverse surface relative to the other surfaces of the alignment post 33, that prevents the first part 2 from moving relative to the second part 3 in the horizontal or vertical directions in Fig. 5.

Fig. 6 is a view of the first part 2 taken along the section A-A of Fig. 5. As realized, the first part 2 measures .543" in length. At the ends on which the first engagements or hooked members 18 are disposed, the first part 2 measures .797" in length. Thus, the hooked members 18 extend for .254" from the second end 17.

Fig. 7 is a view of the second part 2 taken along the section B-B in Fig. 5. As realized, the hooked member 18 measures about .363" in height at the hooked end 19.

Fig. 8 is a top plan view of the second part 2. In Fig. 8, the slots 14 are about .083" in width and .303" in length, and are centered on the top side 6 between the side walls of the SC housings 11.

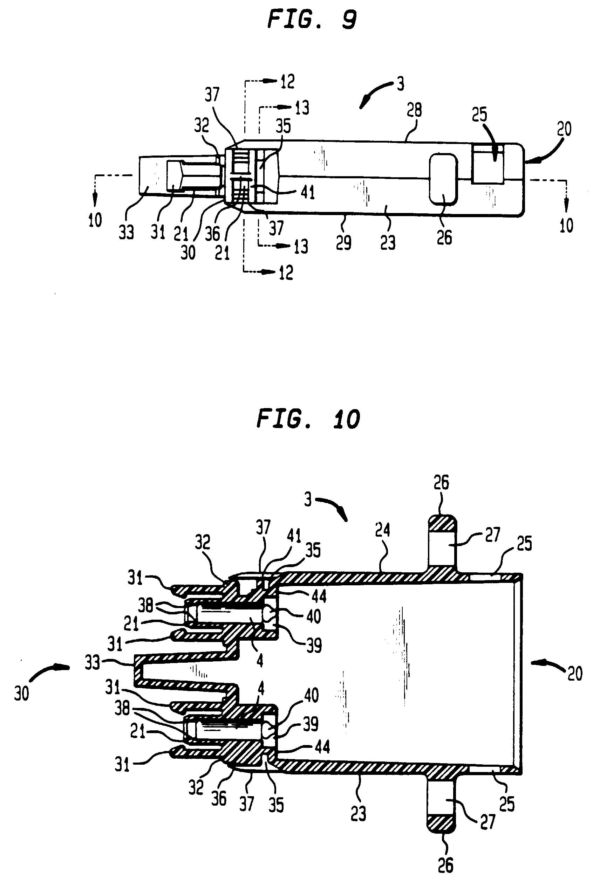

Fig. 9 is a side view of the second part 3. The elements in Fig. 9 have been previously explained, but Fig. 9 has been provided to give a perspective of the second part 3 in three dimensions.

Fig. 10 is a cross-section of the second part 3 taken along the section A-A of Fig. 9. Most of the elements of Fig. 10 have been previously explained. Importantly, Fig. 10 shows how the sleeves 4 are seated in the ferrule guides 21. Each of the ferrule guides 21 has constrictions 38 which have a relatively thin diameter relative to the rest of the inside of the ferrule guides 21. The constrictions 38 define edges against which the sleeves 4 are seated in one end of the ferrule guides 21. The other ends of the sleeves 4 are held in place by the retainers 5 that are inserted in retainer seats 39. The retainer seats 39 have annular recesses that are coaxial with the ferrule guides 21. Through the retainer seats 39, mold holes 40 extend through the second part 3 and define respective slots in which the tabs 22 are seated when the retainers 5 are fixed in the retainer seats 39 using the tool, as previously explained. Near the bottom in Fig. 10, the ramp 36 is shown in cross-section. However, the section at the top of Fig. 10 is not exactly through the center of the ramp 36, but rather is lower in height relative to the bottom of Fig. 10, to show the cross-section of a rib 41 which supports the ramp 36 and defines a side of the recess 35. The rib 41 not only supports the ramp 36, but also has a surface that engages with a respective hooked member 19 of the first part 2 when the first and second parts 2, 3 are snapped together. Also shown in Fig. 10 are the side guides 37 which serve to guide the sides of the hooked members 19 along the ramp 36 and into the recess 35 when the first and second parts 2, 3 are snapped together.

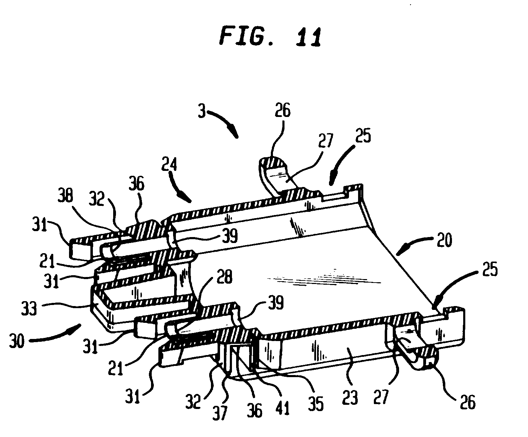

Fig. 11 is a perspective view of the cross-section of Fig. 10. The elements of Fig. 11 have been previously explained, but the view provides a better understanding of the three-dimensional configuration of the second part 3.

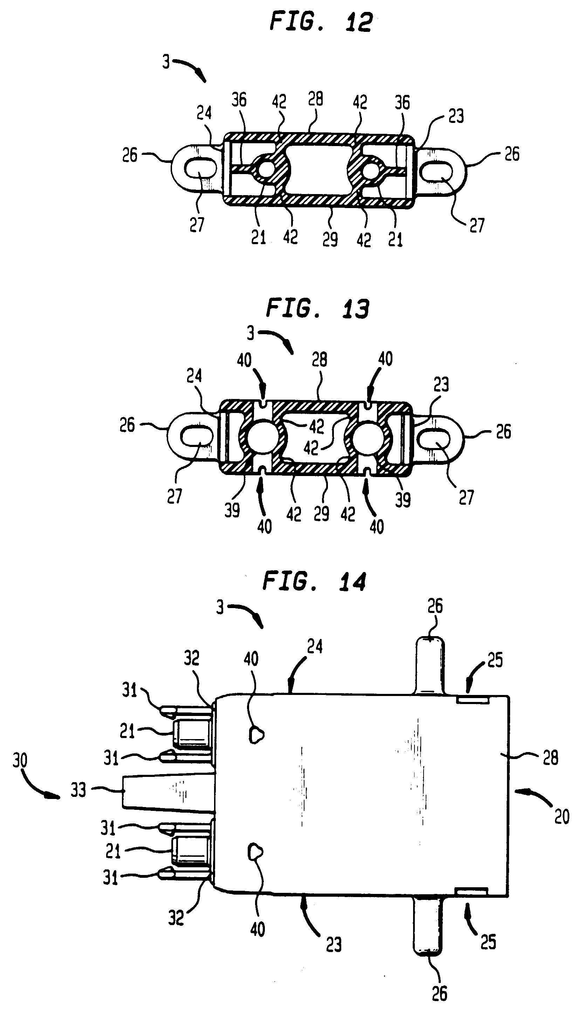

Fig. 12 is a cross-sectional view of the second part 3 taken along section B-B in Fig. 9. As realized, each ferrule guide 21 has a radius of.098" and is supported at .7" centers by the ramps 36 and support members 42. With these dimensions, the second part 3 is adapted to receive an ESCON duplex connector.

Fig. 13 is a cross-section of the second part 3 along the section C-C in Fig. 9. The retainer seats 39 are annular recesses supported by the support members 42. For example, the retainer seats 39 can have an annular side surface with a radius of .166" to receive the outer surfaces of the retainers 5. The mold holes 40 define slots that can receive the tabs 22 of respective retainers 5. The mold holes 40 extend from the top surface 28 to the bottom surface 29. The notches in the mold holes 40 are merely conveniences for forming the mold holes 40 and serve no other functional purpose.

Fig. 14 is a top plan view of the second part 3. As adapted to receive an ESCON duplex connector, the second part 3 is 2.432" in length from the second end 20 to the tip of the alignment post 33. In width between the side walls 23, 24, the second part 3 is 1.268" wide. The alignment post is about .602" in length with a width at the first end 30 of about .196". The alignment post 33 is slightly tapered to ease insertion into the alignment hole 15. The hooked members 31 have lengths of about .324" and the raised platforms 32 are about .03" in length. The ferrule guides 21 extend about .266" in length from respective raised platforms 32.

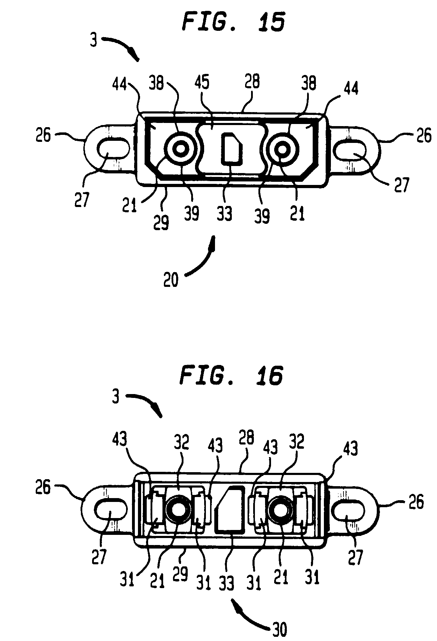

Fig. 15 is a view of the second part 3 viewed from a perspective facing the first end 20. In Fig. 15, the constrictions 38, the ends of the ferrule guides 21, the retainer seats 39 and a hollow inside portion of the alignment post 33 can be seen. Also, surfaces 44 which are level with the proximal end of the retainer seats 39 can be seen in Fig. 15. The surfaces 44 engage with a spring-loaded ferrule protector of the duplex connector and hold it in a fixed position as the duplex connector is advanced into the second part 3 so that the exposed ferrules advance from the spring-loaded ferrule protector into the ferrule guides 21. At a lower elevation in Fig. 15 relative to the surfaces 44, a surface 45 is the inner surface of the end 30 from which the alignment post 33 extends.

Fig. 16 is a view of the second part 3 from a perspective facing the second end 30. As best seen in Fig. 16, the raised platform 32 includes side protrusions 33 that tightly fit between the rails 31 of the first part 2 when the first and second parts 2, 3 are snapped together.

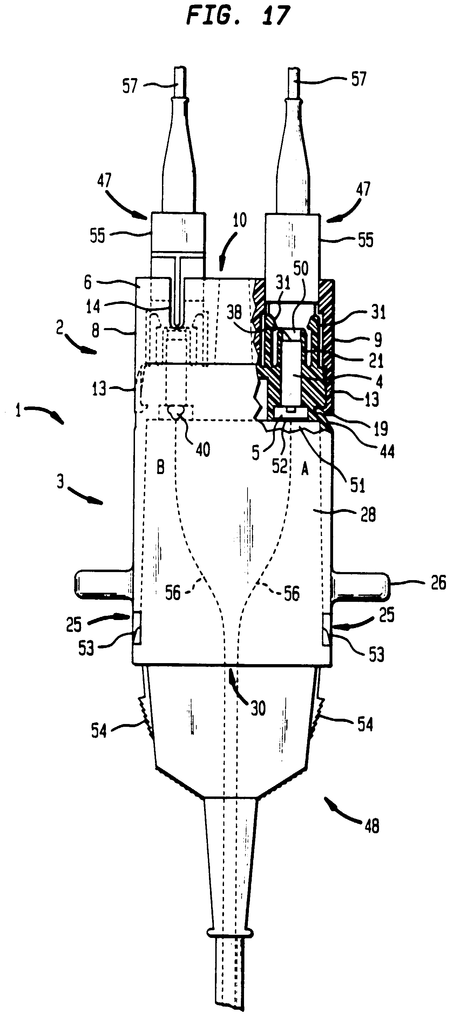

Fig. 17 is a partial cut-away view of the adapter assembly 1 connected to two SC connectors 47 and an ESCON duplex connector 48. When the SC connectors 47 are connected to the first end 10 of the first part 2, respective keys or ridges 49 engage with the slots 14. Also, as shown in the cut-away portion of Fig. 17 with respect to the right hand connector in Fig. 17 and in broken lines with respect to the left hand connector in Fig. 17, the hooked members 31 engage with the SC connectors 47, and the ferrules 50 of the SC connector are inserted into the ferrule guides 21 and the sleeves 4 which are fixed in position by constrictions 8 and retainers 5. In the first end 30 of the second part 3, the ESCON duplex connector 48 is inserted until its spring-loaded ferrule protector 51 meets with the surfaces 44. By further pushing the ESCON duplex connector 48 into the second part 3, the ferrules 52 of the ESCON duplex connector advance into respective retainers 5 and sleeves 4 until hooked members 53, flexed against the side walls 8, 9 when forced into the end 30 of the second part 3, snap into engagement with respective side holes 25. The ESCON duplex connector 48 is thus fixed in position in the adapter assembly 1. Once so fixed, the ends of the ferrules 52 of the ESCON duplex connector 48 are in contact with respective ends of the ferrules 50 of the SC connectors 47 due to the spring-loading of the ferrules 52 and the ferrules 50, and the ends of the optical fibers 56 in the ferrules 52 are substantially aligned with respective ends of the optical fibers 57 in the ferrules 50. To disconnect the ESCON duplex connector 48 from the second part 3, the flexible members 54 are squeezed toward one another to disengage the hooked members 53 from the side holes 25. Because the ferrule protector 51 is spring-loaded, the duplex connector springs out of the second part 3 when the flexible members 54 are squeezed together. The SC connectors can be disconnected by pulling the grips 55 away from the first end 10.

Although the invention has been described with specific illustrations and embodiments, it will be clear to those of ordinary skill in the art that various modifications may be made therein without departing from the spirit and scope of the invention as outlined in the following claims. For example, the dimensions of the specific embodiment of the adapter assembly described herein can be changed without departing from the scope of this invention. Also, although the specific embodiment of the adapter assembly described in this document is adapted to receive an ESCON duplex connector, the adapter assembly can be modified to receive other types of duplex connectors. All such modifications are considered to be included within the scope of this invention.

## Claims

1. An adapter assembly for coupling two standard connector (SC) connectors adapted to be attached to ends of respective simplex optical fiber jumpers, to a duplex connector adapted to be attached to an end of a duplex optical fiber jumper, the adapter assembly comprising:
a first part adapted to receive the two SC connectors, and having first engagements; and
a second part adapted to receive the duplex connector, and having second engagements,
the first and second parts being snapped-together to form the adapter assembly by joining the first engagements to the second engagements.

2. An adapter assembly as claimed in claim 1, wherein the first engagements include two opposing hooked members,
and/or the second engagements include two recesses formed in the second part, adapted to receive the hooked members.

3. An adapter assembly as claimed in claim 2 wherein the second part includes ramps extending along respective sides of the second part from an end of the second part to the respective recesses.

4. An adapter assembly as claimed in claim 1, wherein the second part has an end through which two spaced, parallel ferrule guides extend perpendicularly to the end, and has two hooked members arranged on opposite sides of each ferrule guide, the hooked members extending perpendicularly from the end, and wherein the first part includes two spaced, parallel SC housings,
the SC housings and respective ferrule guides and hooked members together defining two spaced SC connector receptacles after the first and second parts are snapped together.

5. An adapter assembly as claimed in claim 4, wherein the second part includes two raised platforms supporting respective ferrule guides and hooked members, the raised platforms engaging with respective ends of the SC housings when the first and second parts are snapped together.

6. An adapter assembly as claimed in claim 5, wherein the SC housings include respective slots defined by the first part, to receive respective keys of the SC connectors.

7. An adapter assembly as claimed in claim 4 further comprising:
two sleeves inserted inside respective ferrule guides; and
two retainers engaging with the second part to hold respective sleeves in the ferrule guides.

8. An adapter assembly as claimed in claim 7, wherein the second part defines annular recesses communicating with respective ferrule guides, the second part defining slots associated with respective annular recesses, to receive respective tabs of the retainers, and/or the first part defines an alignment hole extending through the first part, and wherein the second part has an alignment post that slides into the alignment hole when the first and second parts are engaged.

9. An adapter assembly as claimed in claim 8, wherein the alignment hole and the alignment post have corresponding canted sides, or the alignment post and the alignment hole are correspondingly tapered.

10. An adapter assembly as claimed in claim 1, wherein the second part is adapted to receive an Enterprise Systems Connections (ESCON) duplex connector.

11. An apparatus to couple two SC connectors to a duplex connector, the apparatus comprising:
an adapter assembly having first and second parts snapped together with respective engagements, an end of the first part receiving the two SC connectors and an end of the second part receiving the duplex connector.

12. An apparatus as claimed in claim 11, wherein the second part includes either two ferrule guides with respective first and second ends, the ferrule guides receiving ferrules of the SC connectors at the first ends, and the ferrule guides receiving ferrules of the duplex connector at the second ends, or two raised platforms provided in association with respective ferrule guides, the two raised platforms being inserted into the first part when the first and second parts are snapped together.

13. An apparatus as claimed in claim 11, wherein the first part defines an alignment hole, and the second part has an alignment post, the alignment hole receiving the alignment post when the first and second parts are engaged.

14. An apparatus as claimed in claim 13 wherein the alignment post and the alignment hole are correspondingly tapered, or the alignment post and alignment hole have corresponding canted sides.

15. An adapter assembly for coupling first optical fiber connectors to a second optical fiber connector, said adapter assembly comprising:
a first apertured part having front and rear ends, for receiving a first optical fiber connector in an aperture thereof at said front end;
engagement arms having distal ends extending from said rear end of said first apertured part;
a second part having front and rear ends, and means at said rear end for receiving the second optical fiber connector; and
means for locking said first part to said second part with said rear end of said first part abutting said front end of said second part, said means comprising recesses formed in said second part for receiving the distal ends of said engagement arms on said first part.

16. An adapter assembly as claimed in claim 15, wherein said second part includes raised platforms inserted in respective apertures of said first apertured part when said means holds said first and second parts together, and/or said first part defines an alignment hole and wherein said second part includes an alignment post inserted into the alignment hole to ensure proper polarity of the first part relative to the second part.

17. An adapter assembly as claimed in claim 16, wherein the alignment post and the alignment hole are correspondingly tapered, or the alignment post and the alignment hole have corresponding canted sides.
